# EUROPEAN PATENT SPECIFICATION

(11) **EP 1 700 403 B1**
(45) Date of publication and mention of the grant of the patent: **12.11.2008**
(21) Application number: 03786485.7
(22) Date of filing: 30.12.2003
(51) Int. Cl.: H04B 7/26, H04L 12/28, H04L 12/56

(54) **METHOD DEVICE FOR TRANSMITTING DATA PACKETS BELONG TO DIFFERENT USERS IN A COMMON TRANSMITTAL PROTOCOL PACKET**
VERFAHREN-EINRICHTUNG ZUM ÜBERTRAGEN VON DATENPAKETEN MIT GEHÖRIGKEIT ZU VERSCHIEDENEN BENUTZERN IN EINEM GEMEINSAMEN ÜBERTRAGUNGS-PROTOKOLLPAKET
PROCEDE ET DISPOSITIF DE TRANSMISSION DE PAQUETS DE DONNEES APPARTENANT A PLUSIEURS UTILISATEURS DANS UN SEUL PAQUET DE PROTOCOLE DE TRANSMISSION DE DONNEES

(43) Date of publication of application: 13.09.2006
(73) Proprietor: TELEFONAKTIEBOLAGET LM ERICSSON (publ), 164 83 Stockholm (SE)
(72) Inventor: FURUSKÄR, Anders, S-113 44 Stockholm (SE); SIMONSSON, Arne, S-954 33 Gammelstad (SE); PETTERSSON, Jonas, S-973 43 Luleå (SE)
(74) Representative: Lundqvist, Alida Maria Therése
(86) International application number: PCT/SE2003/002095
(87) International publication number: WO 2005/064823

(56) References cited:
- WO-A1-00/76090
- US-A1- 2001 004 359
- US-A1- 2002 041 566
- US-B1- 6 496 499

## Description

### TECHNICAL AREA

The present invention relates to a method and device for transmitting and receiving data packets in a data transferring system, and in particular local area networks.

### BACKGROUND OF THE INVENTION

Communication of information and data uses a number of different channels and media, such as wired or wireless data communication networks, LAN's (Local Area Networks), Internet, GSM, to mention a few, where these networks have been designed originally for a specific purpose. Future communication systems will be multi-access systems, i.e. the communication systems will consist of overlapping radio access networks using different access technologies, for example a communication system may comprise a WCDMA network, a GSM network and a Wireless Local Area Network (WLAN) covering the same area. Multi-access systems have emerged because it is hard to design one single access technology suitable for all kinds of services and all deployment scenarios in a communication system (e.g. personal area networks, indoor areas, hotspots, wide area networks etc.). It is also costly to replace previous generations of systems because the operator may loose existing customer base and because the systems are widely deployed.

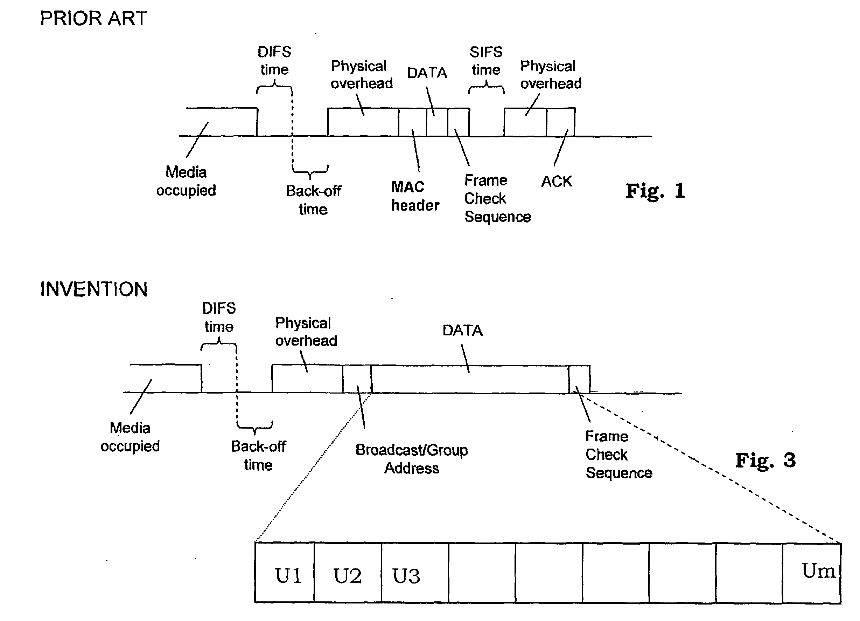

One such communication network that could be used in a multi-access system is the named LAN and in particular WLAN. One of the mostly used standards for WLAN is the IEEE standard 802.11. For transferring data over the WLAN, IEEE 802.11 systems use a Medium Access Control (MAC) protocol called Carrier Sense Multiple Access (CSMA). This MAC protocol consists of a rather large header comprising a destination address, a source address and a field indicating the type of protocol being carried, followed by the payload data frame and ending with a frame check sequence. According to the protocol MAC packets are separated by several time intervals, such as a back-off time and a shorter interframe space SIFS, and a distributed inter frame space, DIFS. Further overhead is also added by the physical layer. An example of the overhead caused by a simple data transmission is shown in Fig. 1.

When transmitting speech over a LAN or a WLAN using the MAC protocol, short speech packages generated by speech coders of the speech services are inserted into the data frame of a MAC packet. The MAC/PHY headers are thus very large in comparison with the data, forming a large overhead. Further the separation of the MAC packets by the time interval delays the transmission of the speech packets in for example the downlink from an access point of a WLAN network. The intervals and the MAC / PHY packets headers form a large overhead counted per packet when transmitting speech and this overhead is independent of the speech packet length.

A simple analysis of frame exchange and back-off times reveals some fundamental characteristics and limitations of the IEEE 802.11 MAC for supporting voice services.

The PLCP preamble and PLCP header together take 9 × 8 / 1Mbps + 6 × 8 / 2 Mbps = 96µs to transmit. Using 11 Mbps, the MAC header and FCS take (30+4) × 8 / 11 Mbps = 31µs. Assuming a 64kbps voice coder and a frame length of 20ms, disregarding RTP/UDP/IP headers, the size of a voice frame is 64kbps × 20ms = 1280bits. At 11Mbps this takes 116µs to transmit. Together this results in a total transmission time of 96µs + 31µs + 116µs = 243µs. Before the next frame can be transmitted, an acknowledgement also has to be transmitted. The acknowledgement is sent 10µs after the data frame is received. It has the same format as a data frame with an MSDU payload of 14 bytes. The transmission time for the acknowledgement, at 11 Mbps, is 96µs + 31µs + 14 × 8 / 11 = 137µs. After the acknowledgement is sent the medium has to be left idle for at least 50µs. The total frame exchange time is thus 243µs + 10µs + 137µs + 50µs = 440µs. This corresponds to a relative overhead of (440µs - 116µs) / 440µs = 74%.

Another problem in the context of transmitting conversational speech is that the packets must be transmitted with low delay since long delays ruins the interaction of the conversation. It is thus generally not possible to wait, store or buffer speech packets to any larger extent, which may be done with other types of data.

The delay problem is also present when the network system uses Distributed Coordination Function, DCF, for avoiding collision of transmitted packets. The DCF involves listening to other stations that are transmitting and attempting collision avoidance through the use of random back-off timeouts. Collision avoidance is accomplished by requiring each device that is about to transmit to choose a random value within a specified range. Each device must then wait this random time period following the previous transmission before the start of its transmission. This results in an equal access probability for every transmitter.

With a WLAN using an access point and a number of mobile devices this implies that there is only one transmitter in the downlink (the access point) and several in the uplink (the mobile devices) whereby the access point, which can choose only one random number, has to compete with the devices, which in turn could mean a very unfavourable delay for the transmissions from the access point, since all these transmissions have to share an access probability that is equal to the uplink access probability.

Document US 6,496,499 B1 discloses a method for coordinating isochronous devices accessing a wireless network in order to minimize the collision risk. However it does not address the inherent problems of the overhead of the MAC protocol, and the capacity problems this leads to as regards transmission of speech.

Document WO00/76096A1 shows a method of transmitting speech frames in a TDMA network in which a timeslot of the TDMA frame is allocated to at least two users. The method comprises encoded MAC blocks. However, it does not deal with the disadvantage of the large overhead of the MAC protocol when sending short packets such as speech in local area networks.

### BRIEF DESCRIPTION OF THE INVENTION

The aim of the present invention is to remedy the drawbacks of transmitting speech or other short packages over a communication network with relatively large overhead per package.

This aim is solved by the characterising features of claims 1, 17, 18, 29, 26 and 27.

Advantageous features of the invention are found in the dependent claims.

According to the present invention the main aim is to reduce the large overhead encountered when sending short packets such as speech in a local area network, using transmittal protocols such as the MAC protocol, which introduces a large overhead per packet.

This aim is solved by collecting several data packets in one data transmittal protocol packet, transmitting this protocol, and receiving the protocol wherein each of the several data packets are addressed to specific destinations.

The collection and transmittal of several data packets in one transmittal protocol packet, such as a MAC packet, will provide a reduction of the amount of overhead information per transmitted data packet, such as speech, thereby increasing the efficiency by which a radio channel is used. Also the delay caused by the back-off and SIFS intervals will be reduced, counted on a per packet basis. Also, in the event that a MAC packet has been scheduled to wait long before it is transmitted, which could be the case with DCF in the downlink, it can compensate for this long waiting time by being able to send large amounts of data in its payload.

With the present invention it is possible to use the LAN and WLAN in a multi-access system implementing speech as a data medium transmitted wherein the drawbacks of the WLAN in connection to speech has been greatly reduced. A more flexible use of existing network media for other and/or complimenting applications of use is obtained.

These and other features and advantages of the present invention will become apparent from the following detailed description of the invention.

### BRIEF DESCRIPTION OF THE DRAWINGS

In the following detailed description of the invention reference will be made to the accompanying drawings, of which
- Fig. 1: is a schematic view of a MAC packet according to the prior art,
- Fig. 2: is a schematic view of a wireless local area network WLAN,
- Fig. 3: is a schematic view of a MAC packet according to the present invention, and
- Fig. 4: shows an example of addressing speech packets according to the present invention.

### DETAILED DESCRIPTION OF THE INVENTION

The present invention relates to transmitting short packages over a LAN network, and in particular a wireless LAN, which packages may be speech packages that generally are rather short and further cannot be delayed for too long before they are transmitted.

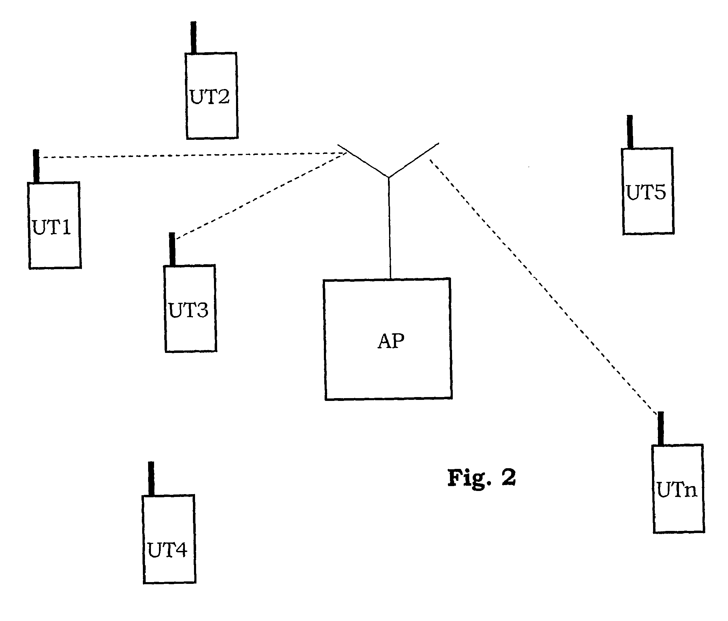

The general idea is to use the WLAN as a communication medium for speech as well as for conventional data transfer. This provides the possibility of having mobile telephone handsets within a building or a local area utilising an existing wireless network, originally intended for wireless connection of computers, printers, modems and the like electronic equipment. Figure 2 shows a schematic example of a wireless communication network having an access point AP and a number of user terminals UT 1-n.

In such a network a data transmission protocol, in the detailed description a MAC protocol, is used to transmit data packets between the user terminals and the access point. It comprises a header comprising a destination address, a source address and a field indicating the type of protocol being carried and ending with a frame check sequence. According to the MAC protocol MAC packets are separated by several time intervals, such as a back-off time and a shorter inter frame space SIFS, and a distributed inter frame space, DIFS, Fig. 1.

The idea of the present invention is to collect, for one or more active users UT1 - UTn, more than one speech packet and insert these into the data field of a MAC packet, at the access point AP, before transmitting it to one or more destination. The data field is thus divided into a number of speech frames, U1 - Um, Fig. 3, where speech packets from several active user terminals are collected and inserted into the data field, thus "expanding" the data field compared to if only one speech packet would be inserted.

Since each speech packet is very short in comparison with the maximum length of the data field of the MAC packet a large number of speech packets from active user terminals may be inserted and transmitted to the respective destinations.

As an example, typically 50 speech packets per second are transmitted to a single user. If there are 10 active users then 500 MAC packets per second need to be transmitted with the conventional method of transmitting one speech packet per MAC packet. With the present invention, by collecting and transmitting several speech packets per MAC packet, the packets from these 10 active users are collected and inserted together in one MAC packet and, in case one speech packet per user is inserted in the MAC packet, subsequently only 50 MAC packets need to be transmitted. It is thus seen that the overhead/data ratio is reduced by a factor 10. Further reductions are possible if more than one speech packet per user is inserted in the MAC packet. This will however increase the speech packet delay.

In order for each speech packet in the collected MAC packet to reach its intended destination, it has to be provided with destination addresses. There are several known methods for addressing data packets known to the person skilled in the art that might be applicable.

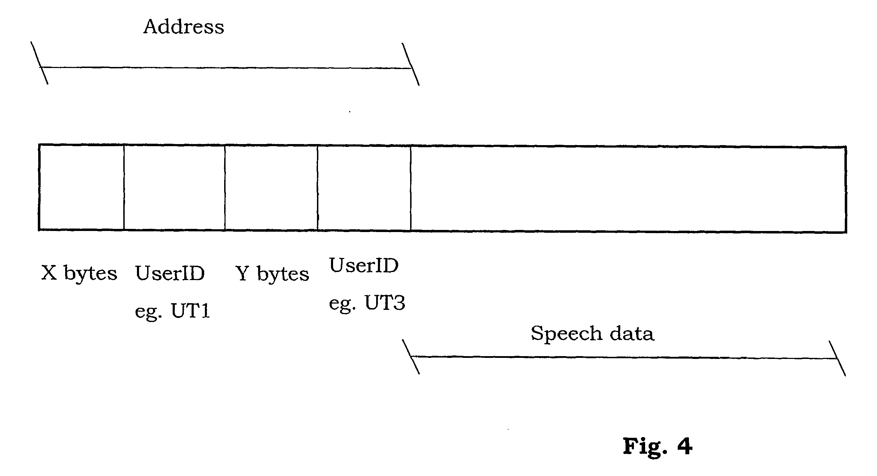

A few conceivable methods will be described. In one the existing MAC header is used, where this is set to a broadcast address, wherein the MAC packet is sent to all connected receivers, or is set to a multicast address, wherein the MAC packet is sent to group of predefined receivers, for sorting speech users from data users. For addressing each speech packet in the data field a destination address could be arranged first in the data field indicating that *x* number of bytes of the speech data belongs to a certain user ID, UT1 in the example of Fig. 4, followed by y number of bytes belonging to another user ID, UT3, etc, or for that matter the same user. In this context it is to be understood that the order also could be the reverse, ie. user ID first and then the number of bytes that belong to that user. If each speech frame was predefined and fixed regarding its byte size, it is possible to omit the number of bytes belonging to each user ID, and to merely have the user ID's in the address field where the speech packet of the first speech frame belongs to the first user ID in the address field, the speech packet of the second speech frame belongs to the second user ID and so on. The user ID could be a MAC address, an IP address or any other identifier that is unique within the network.

The collection of speech packets may be done in different ways such as within a defined time interval, which could be periodic or after first collected packet. The later is suitable when there are delay requirements for packets such as for speech. Other examples of collection principles are that a predetermined number of packets are stored, storing packets until a predefined data field size is filled up and/or packets from a predefined number of active users are stored before the MAC packet is transmitted. These properties may be fixed all the time or dynamically altered depending on the application and/or load on the network. One example of a data field size is the maximum segment size for the MAC protocol, 2346 bytes. Combinations of collection principles can also be applied, either to send MAC packet when several criteria are fulfilled or when one of several criteria is fulfilled. For example to send a MAC packet when either a defined data size is reached, to minimize overhead, or when a time since first collected data packet has elapsed, to still fulfil a delay requirement.

It is further conceivable to more directly connect the user ID and possibly the number of bytes belonging thereto to each speech packet in the data field instead of having the addresses in the beginning of the data field.

Another possibility is to modify the MAC header so that the destination address for each speech packet is arranged in the address field of the MAC header, thereby allowing for direct addressing of multiple users.

Several ways exist to do this. For example, the addressing principles described above and used in the data field could instead be used as a part of the MAC header.
As seen there are several possibilities of addressing each speech packet so that it reaches the intended destination.

As well as each MAC packet contains speech packets from different users it may of course contain more than one packet per user. If for example there are few active users several packets from one user could be inserted in one MAC packet. In some applications speech packets may be "mixed" with ordinary data packets if it is convenient for "filling" the data field of the MAC packet. Provisions must then be made to address the different parts of the data field.

It is further conceivable to implement the present invention such that speech packets from active users are stored in individual buffers that are connected to individual inputs of a time multiplex unit that at its output generates lumped or multiplexed speech packets.

The present invention of collecting speech packets from several active users also has the advantage, apart from reducing the overhead/data ratio, i.e. increasing the capacity, that it improves the transmission of packets in a WLAN with distributed coordination function, DCF, wherein the access point, having one random number trying to access the downlink, has to compete with several active mobile terminals on the network, all having the same probability. When the access point gets access to transmit, it actually sends data, speech packets, to several users in one transmission instead of only one user as with the conventional way. Thereby the reduced access probability per user in the downlink is counteracted.

Normally in transmitting data over a LAN using MAC protocol, an acknowledgement, ACK, is sent back to the transmitter that the packet has been received. With the present invention and a normal MAC packet configuration it is difficult to send an ACK, since different parts of the data field is received by different destinations. Further according to the IEEE 802.11 standard, regarding wireless LANs, no ACKs are sent in response to broadcast or multicast messages. Either the method according to the invention could accept that no ACKs are sent, this is often the case for speech transmitting systems, like GSM, or the MAC protocol could be modified allowing introduction of ACKs for example by letting users contend for the uplink using normal or modified channel access procedures when transmitting ACKs.

The transmittal packet containing several user packets could further be given priority by using any therefore available means in the communication network. In for example 802.11 wireless LAN, a shorter interframe space than DIFS could be used, or on average shorter back-off timers.

Even if the detailed description has shown its use for speech packets it is of course applicable to other types of small data packets, especially delay sensitive packets from different sources, for example network gaming. It is further applicable to any broadcast-capable communications network with a high overhead per packet.

It is to be understood that the embodiments described above and shown in the drawings only are to be regarded as non-limiting examples of the invention and that it may be modified within the scope of protection defined by the patent claims.

## Claims

1. Method for transmitting data packets over a local area network, utilizing transmittal protocol packets comprising a header, which in turn comprises an address field, and a data field, collecting and inserting several data packets from several users (UT1, UT3, UTn) active on the local area network into the data field of a transmittal protocol packet, and transmitting the transmittal protocol packet, wherein each inserted data packet is associated with an individual address, **characterised by** using a broadcast or multicast address for all active users (UT1, UT3, UTn) in the header of the transmittal protocol and attaching an individual address to each data packet in the data field.

2. Method according to claim 1, **characterised by** arranging the individual addresses in the header of the transmittal protocol.

3. Method according to any of the preceding claims, **characterised in that** the transmittal protocol is a MAC protocol.

4. Method according to claim 3, **characterised in that** the MAC protocol is a Carrier Sense Multiple Access protocol.

5. Method according to any of the preceding claims, **characterised in that** the data packets comprises speech packets.

6. Method according to any of the preceding claims, **characterised in** the further step of storing a number of data packets before insertion into the data field.

7. Method according to claim 6, **characterised by** storing data packets collected within a defined time interval.

8. Method according to claim 6, **characterised by** storing a defined number of data packets.

9. Method according to claim 6, **characterised by** storing data packets filling up a defined data field size.

10. Method according to claim 6, **characterised in that** the further step of storing data packets from several active users (UT1, UT3, UTn) in individual buffers connected to individual inputs of a time multiplex unit.

11. Method according to claim 10, **characterised by** storing data packets from a defined number of active users (UT 1, UT3, UTn).

12. Method according to claim 7, **characterised in that** the further step of forwarding multiplexed data packets to a packetizing unit for insertion into the data field.

13. Method according to any preceding claim, **characterised in that** the local area network is wireless.

14. Method according to claim 9, **characterised in that** the collection is performed in an access point (AP).

15. Method according to any of the preceding claims, **characterised in that** the transmittal protocol containing data packets from several users (UT1, UT3, UTn) is given transmission priority.

16. Method of receiving data packets transmitted according to any of the claims 1 - 15, **characterised by** receiving the transmittal protocol packet, identifying the address of the header of the transmittal protocol packet, and if correct, collecting at least one of the data packets in the data field of the transmittal protocol packet.

17. Computer program product comprising computer code means and/or software code portions for making a computer or processor perform the steps of any of the claims 1 - 16.

18. Device for transmitting data packets over a local area network, utilizing transmittal protocol packets comprising a header, which in turn comprises an address field, and a data field, comprising means for collecting and inserting several data packets from several users (UT1, UT3, UTn) active on the local area network into the data field of a transmittal protocol packet, means for transmitting the transmittal protocol packet and means for associating an inserted data packet with an individual address, **characterised by** using a broadcast or multicast address in the header of the transmittal protocol and comprising means for attaching an individual address to each data packet in the data field.

19. Device according to claim 18, **characterised by** means for arranging the individual addresses in the header of the transmittal protocol.

20. Device according to any of the preceding claims, **characterised in that** the transmittal protocol is a MAC protocol and that the data packets comprises speech packets.

21. Device according to claim 20, **characterised in that** the MAC protocol is a Carrier Sense Multiple Access protocol.

22. Device according to any of the preceding claims, **characterised by** the means for storing a number of data packets before insertion into the data field.

23. Device according to claim 22, **characterised by** means for storing data packets from several active users in individual buffers connected to individual inputs of a time multiplex unit.

24. Device for receiving data packets transmitted from the device according to any of the claims 18 - 23, **characterised by** means for receiving the transmittal protocol packet, means for identifying the address of the header of the transmittal protocol packet, and if correct, means for collecting at least one of the data packets in the data field of the transmittal protocol packet.

25. System for handling data packets on a local area network, utilizing transmittal protocol packets comprising a header, which in turn comprises an address field, and a data field, comprising means for collecting and inserting several data packets from several users (UT1, UT3, UTn) active on the local area network into the data field of a transmittal protocol packet, means for transmitting the transmittal protocol packet, means for associating an inserted data packet with an individual address, means for receiving the transmittal protocol packet, means for identifying the address of the header of the transmittal protocol packet, wherein the address is a broadcast or multicast address for all active users (UT1, UT3, UTn), and if correct, means for collecting at least one of the data packets in the data field of the transmittal protocol packet.

26. System according to claim 25, **characterised in that** the local area network is wireless.

27. System according to claim 26, **characterised in that** the collection is performed in an access point (AP).

## Patentansprüche

1. Verfahren zum Übertragen von Datenpaketen über ein Lokalbereichsnetzwerk, Verwenden von Übertragungsprotokollpaketen mit einem Header, der wiederum ein Adressfeld umfasst und einem Datenfeld, Sammeln und Einsetzen mehrerer Datenpakete von mehreren Benutzern (UT1, UR3,UTn), die auf dem Lokalbereichsnetzwerk aktiv sind, in das Datenfeld eines Übertragungsprotokollpaketes und Übertragen des Übertragungsprotokollpakets, wobei jedes eingesetzte Datenpaket mit einer individuellen Adresse verknüpft ist, **gekennzeichnet durch** Verwenden einer Broadcast- oder Multicast-Adresse für alle aktiven Benutzer (UR1, UT3, UTn) in dem Header des Übertragungsprotokolls und Anhängen einer individuellen Adresse an jedes Datenpaket in dem Datenfeld.

2. Verfahren nach Anspruch 1, **gekennzeichnet durch** Anordnen der individuellen Adressen in dem Header des Übertragungsprotokolls.

3. Verfahren nach einem der vorangehenden Ansprüche, **dadurch gekennzeichnet, dass** das Übertragungsprotokoll ein MAC-Protokoll ist.

4. Verfahren nach Anspruch 3, **dadurch gekennzeichnet, dass** das MAC-Protokoll ein Carrier-Sense-Multiple-Access-Protokoll ist.

5. Verfahren nach einem der vorangehenden Ansprüche, **dadurch gekennzeichnet, dass** die Datenpakete Sprachpakete umfassen.

6. Verfahren nach einem der vorangehenden Ansprüche, **gekennzeichnet durch** den weiteren Schritt eines Speicherns einer Anzahl von Datenpaketen vor einem Einsetzen in das Datenfeld.

7. Verfahren nach Anspruch 6, **gekennzeichnet durch** ein Speichern von Datenpaketen, die innerhalb eines definierten Zeitintervalls gesammelt werden.

8. Verfahren nach Anspruch 6, **gekennzeichnet durch** ein Speichern einer definierten Anzahl von Datenpaketen.

9. Verfahren nach Anspruch 6, **gekennzeichnet durch** ein Speichern von Datenpaketen, die eine definierte Datenfeldgröße auffüllen.

10. Verfahren nach Anspruch 6, **gekennzeichnet durch** den weiteren Schritt eines Speicherns von Datenpaketen von mehreren aktiven Benutzern (UT1, UT3, UTn) in individuellen Puffern, die mit individuellen Eingängen einer Zeitmultiplexeinheit verbunden sind.

11. Verfahren nach Anspruch 10, **gekennzeichnet durch** ein Speichern von Datenpaketen von einer definierten Anzahl aktiver Benutzer (UT1, UT3, UTn).

12. Verfahren nach Anspruch 7, **gekennzeichnet durch** den weiteren Schritt eines Weiterleitens gemultiplexter Datenpakete zu einer Packetiereinheit zum Einsetzen in das Datenfeld.

13. Verfahren nach einem der vorangehenden Ansprüche, **dadurch gekennzeichnet, dass** das Lokalbereichsnetzwerk drahtlos ist.

14. Verfahren nach Anspruch 9, **dadurch gekennzeichnet, dass** die Sammlung in einem Zugangspunkt (AP - Access Point) durchgeführt wird.

15. Verfahren nach einem der vorangehenden Ansprüche, **dadurch gekennzeichnet, dass** dem Übertragungsprotokoll, das Datenpakete von mehreren Benutzern (UT1, UT3, UTn) umfasst, eine Übertragungspriorität gegeben wird.

16. Verfahren eines Empfangens von Datenpaketen, die nach einem der Ansprüche 1 bis 15 übertragen werden, **gekennzeichnet durch** Empfangen des Übertragungsprotokollpaketes, Identifizieren der Adresse des Headers des Übertragungsprotokollpaketes und falls korrekt, Sammeln zumindest eines der Datenpakete in dem Datenfeld des Übertragungsprotokollpaketes.

17. Computerprogrammprodukt mit einer Computercodevorrichtung und/oder Softwarecodeteilen zum Veranlassen eines Computers oder Prozessors die Schritte nach einem der Ansprüche 1-16 auszuführen.

18. Gerät zum Übertragen von Datenpaketen über Lokalbereichsnetzwerk, Verwenden von Übertragungsprotokollpaketen mit einem Header, der wiederum ein Adressfeld umfasst und einem Datenfeld, mit einer Vorrichtung zum Sammeln und Einsetzen mehrerer Datenpakete von mehreren Benutzern (UR1, UT3, UTn), die auf dem Lokalbereichsnetzwerk aktiv sind, in das Datenfeld eines Übertragungsprotokollpaketes, einer Vorrichtung zum Übertragen des Übertragungsprotokollpaketes und einer Vorrichtung zum Verknüpfen eines eingesetzten Datenpaketes mit einer individuellen Adresse, **gekennzeichnet durch** Verwenden einer Broadcast- oder Multicast-Adresse in dem Header des Übertragungsprotokolls und mit einer Vorrichtung zum Anhängen einer individuellen Adresse an jedes Datenpaket in dem Datenfeld.

19. Gerät nach Anspruch 18, **gekennzeichnet durch** eine Vorrichtung zum Anordnen der individuellen Adressen in dem Header des Übertragungsprotokolls.

20. Gerät nach einem der vorangehenden Ansprüche, **dadurch gekennzeichnet, dass** das Übertragungsprotokoll ein MAC-Protokoll ist und dass die Datenpakete Sprachpakete umfassen.

21. Gerät nach Anspruch 20, **dadurch gekennzeichnet, dass** das MAC-Protokoll ein Carrier-Sense-Multiple-Access-Protokoll ist.

22. Gerät nach einem der vorangehenden Ansprüche, **gekennzeichnet durch** die Vorrichtung zum Speichern einer Anzahl von Datenpaketen vor einem Einsetzen in das Datenfeld.

23. Gerät nach Anspruch 22, **gekennzeichnet durch** eine Vorrichtung zum Speichern von Datenpaketen von mehreren aktiven Benutzern in individuellen Puffern, die mit individuellen Eingängen einer Zeitmultiplexeinheit verbunden sind.

24. Gerät zum Empfangen von Datenpaketen, die von dem Gerät nach einem der Ansprüche 18 - 23 übertragen werden, **gekennzeichnet durch** eine Vorrichtung zum Empfangen des Übertragungsprotokollpaketes, einer Vorrichtung zum Identifizieren der Adresse des Headers des Übertragungsprotokollpaketes und falls korrekt, einer Vorrichtung zum Sammeln zumindest eines der Datenpakete in dem Datenfeld des Übertragungsprotokollpaketes.

25. System zum Handhaben von Datenpaketen auf einem Lokalbereichsnetzwerk, Verwenden von Übertragungsprotokollpaketen mit einem Header, der wiederum ein Adressfeld umfasst, und einem Datenfeld, mit einer Vorrichtung zum Sammeln und Einsetzen mehrerer Datenpakete von mehreren Benutzern (UT1, UT3, UTn), die auf dem Lokalbereichsnetzwerk aktiv sind, in das Datenfeld eines Übertragungsprotokollpaketes, einer Vorrichtung zum Übertragen des Übertragungsprotokollpaketes, einer Vorrichtung zum Verknüpfen eines eingesetzten Datenpaketes mit einer individuellen Adresse, einer Vorrichtung zum Empfangen des Übertragungsprotokollpaketes, einer Vorrichtung, zum Identifizieren der Adresse des Headers des Übertragungsprotokollpaketes, wobei die Adresse eine Broadcast- oder Multicast-Adresse für alle aktiven Benutzer (UT1, UT3, UTn) ist und falls korrekt, eine Vorrichtung zum Sammeln zumindest eines der Datenpakete in dem Datenfeld des Übertragungsprotokollpaketes.

26. System nach Anspruch 25, **dadurch gekennzeichnet, dass** das Lokalbereichsnetzwerk drahtlos ist.

27. System nach Anspruch 26, **dadurch gekennzeichnet, dass** die Sammlung in einem Zugangspunkt (AP) durchgeführt wird.

## Revendications

1. Procédé pour transmettre des données par paquets sur un réseau local, en utilisant des paquets de protocole de transmission comprenant un en-tête qui comprend quant à lui un champ d'adresse et un champ de données, en collectant et en insérant plusieurs paquets de données provenant de plusieurs utilisateurs (UT1, UT3, UTn) actifs sur le réseau local dans le champ de données d'un paquet de protocole de transmission, et en transmettant le paquet de protocole de transmission, dans lequel chaque paquet de données inséré est associé à une adresse individuelle, **caractérisé en ce qu'**on utilise une adresse de diffusion ou de multidiffusion pour tous les utilisateurs actifs (UT1, UT3, UTn) dans l'en-tête du protocole de transmission et **en ce qu'**on lie une adresse individuelle à chaque paquet de données du champ de données.

2. Procédé selon la revendication 1, **caractérisé en ce qu'**on dispose les adresses individuelles dans l'en-tête du protocole de transmission.

3. Procédé selon l'une quelconque des revendications précédentes, **caractérisé en ce que** le protocole de transmission est un protocole MAC.

4. Procédé selon la revendication 3, **caractérisé en ce que** le protocole MAC est un protocole d'Accès Multiple à Détection de Porteuse.

5. Procédé selon l'une quelconque des revendications précédentes, **caractérisé en ce que** les paquets de données comprennent des paquets vocaux.

6. Procédé selon l'une quelconque des revendications précédentes, **caractérisé par** l'étape supplémentaire consistant à stocker un nombre de paquets de données avant leur insertion dans le champ de données.

7. Procédé selon la revendication 6, **caractérisé en ce qu'**on stocke des paquets de données collectés au cours d'un intervalle de temps défini.

8. Procédé selon la revendication 6, **caractérisé en ce qu'**on stocke un nombre défini de paquets de données.

9. Procédé selon la revendication 6, **caractérisé en ce qu'**on stocke des paquets de données remplissant un champ de données de taille définie.

10. Procédé selon la revendication 6, **caractérisé par** l'étape supplémentaire consistant à stocker des paquets de données provenant d'utilisateurs actifs (UT1, UT3, UTn) dans des tampons individuels connectés à des entrées individuelles d'une unité de multiplexage temporel.

11. Procédé selon la revendication 10, **caractérisé en ce qu'**on stocke des paquets de données provenant d'un nombre défini d'utilisateurs actifs (UT1, UT3, UTn).

12. Procédé selon la revendication 7, **caractérisé par** l'étape supplémentaire consistant à réexpédier des paquets de données multiplexés vers une unité de mise en paquets pour leur insertion dans le champ de données.

13. Procédé selon l'une quelconque des revendications précédentes, **caractérisé en ce que** le réseau local est sans fil.

14. Procédé selon la revendication 9, **caractérisé en ce que** la collecte est effectuée en un point d'accès (AP, pour Access Point).

15. Procédé selon l'une quelconque des revendications précédentes, **caractérisé en ce qu'**on confère au protocole de transmission contenant des paquets de données provenant de plusieurs utilisateurs (UT1, UT3, UTn) une priorité de transmission.

16. Procédé de réception de paquets de données transmis selon l'une quelconque des revendications 1-15, **caractérisé par** la réception du paquet de protocole de transmission, l'identification de l'adresse de l'en-tête du paquet de protocole de transmission et, si celle-ci est correcte, la collecte d'au moins l'un des paquets de données dans le champ de données du paquet de protocole de transmission.

17. Produit à base de programme informatique comprenant un moyen générateur de code informatique et/ou des parties de code logiciel pour faire en sorte qu'un ordinateur ou qu'un processeur exécute les étapes de l'une quelconque des revendications 1-16.

18. Dispositif pour transmettre des paquets de données sur un réseau local en utilisant des paquets de protocole de transmission comprenant un en-tête qui comprend quant à lui un champ d'adresse et un champ de données, comprenant un moyen pour collecter et insérer plusieurs paquets de données provenant de plusieurs utilisateurs (UT1, UT3, UTn) actifs sur le réseau local dans le champ de données d'un paquet de protocole de transmission, un moyen pour transmettre le paquet de protocole de transmission, et un moyen pour associer un paquet de données inséré à une adresse individuelle, **caractérisé en ce qu'**on utilise une adresse de diffusion ou de multidiffusion dans l'en-tête du protocole de transmission et comprenant un moyen pour lier une adresse individuelle à chaque paquet de données dans le champ de données.

19. Dispositif selon la revendication 18, **caractérisé par** un moyen pour disposer les adresses individuelles dans l'en-tête du protocole de transmission.

20. Dispositif selon l'une quelconque des revendications précédentes, **caractérisé en ce que** le protocole de transmission est un protocole MAC et **en ce que** les paquets de données comprennent des paquets de parole.

21. Dispositif selon la revendication 20, **caractérisé en ce que** le protocole MAC est un protocole d'Accès Multiple à Détection de Porteuse.

22. Dispositif selon l'une quelconque des revendications précédentes, **caractérisé par** un moyen pour stocker un nombre de paquets de données avant leur insertion dans le champ de données.

23. Dispositif selon la revendication 22, **caractérisé par** un moyen pour stocker des paquets de données provenant de plusieurs utilisateurs actifs dans des tampons individuels connectés à des entrées individuelles d'une unité de multiplexage temporel.

24. Dispositif pour recevoir des paquets de données transmis depuis le dispositif selon l'une quelconque des revendications 18-23, **caractérisé par** un moyen pour recevoir le paquet de protocole de transmission, un moyen pour identifier l'adresse de l'en-tête du paquet de protocole de transmission et, si celle-ci est correcte, un moyen pour collecter au moins l'un des paquets de données dans le champ de données du paquet de protocole de transmission.

25. Système pour traiter des paquets de données sur un réseau local en utilisant des paquets de protocole de transmission comprenant un en-tête qui comprend quant à lui un champ d'adresse et un champ de données, comprenant un moyen pour collecter et insérer plusieurs paquets de données provenant de plusieurs utilisateurs (UT1, UT3, UTn) actifs sur le réseau local dans le champ de données d'un paquet de protocole de transmission, un moyen pour transmettre le paquet de protocole de transmission, un moyen pour associer un paquet de données inséré à une adresse individuelle, un moyen pour recevoir le paquet de protocole de transmission, un moyen pour identifier l'adresse de l'en-tête du paquet de protocole de transmission, dans lequel l'adresse est une adresse de diffusion ou de multidiffusion pour tous les utilisateurs actifs (UT1, UT3, UTn) et, si elle est correcte, un moyen pour collecter au moins l'un des paquets de données dans le champ de données du paquet de protocole de transmission.

26. Système selon la revendication 25, **caractérisé en ce que** le réseau local est sans fil.

27. Système selon la revendication 26, **caractérisé en ce que** la collecte est effectuée en un point d'accès (AP).
